(19) Europäisches Patentamt

European Patent Office

Office européen des brevets

(11) EP 1 441 310 A2

## (12) EUROPEAN PATENT APPLICATION

(43) Date of publication:
28.07.2004 Bulletin 2004/31

(51) Int Cl.$^7$: **G06T 7/00**, G06F 19/00

(21) Application number: 04001001.9

(22) Date of filing: 19.01.2004

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.01.2003 JP 2003010898**

(71) Applicant: **Fuji Photo Film Co., Ltd.
Kanagawa-ken (JP)**

(72) Inventors:
• **Imamura, Takashi
  Asao-ku, Kawasaki-shi, Kanagawa-ken (JP)**
• **Takeo, Hideya
  Kasei-machi, Ashigarakami-gun, Kangawa-k
  (JP)**

(74) Representative: **Klunker . Schmitt-Nilson . Hirsch
Winzererstrasse 106
80797 München (DE)**

(54) **Prospective abnormal shadow detecting system**

(57)     A plurality of threshold values for binary-coding radiation image data of an object is stepwise set. Binary-coding processing is carried out on the radiation image data by the use of each of the threshold values and a plurality of binary images are generated. Isolated regions are extracted as primary-label regions, and a growth score for evaluating the likelihood that the primary-label region represents a growth is calculated for each primary-label region. The growth scores for the respective primary-label regions are compared with each other and a predetermined number of primary-label regions which are higher in the growth score than any of the others are detected as the prospective abnormal shadow region.

# FIG.4

```
        START
          │
          ▼
┌───────────────────────┐
│  THRESHOLD VALUE SET   │ #1
└───────────────────────┘
          │
          ▼
┌───────────────────────┐
│ BINARY IMAGES GENERATED│ #2
└───────────────────────┘
          │
          ▼
┌───────────────────────┐
│    PRIMARY-LABEL        │ #3
│  REGION EXTRACTED       │
└───────────────────────┘
          │
          ▼
┌───────────────────────┐
│GROWTH SCORES CALCULATED │ #4
└───────────────────────┘
          │
          ▼
┌───────────────────────┐
│   SECONDARY-LABEL       │ #5
│  REGION DETERMINED      │
└───────────────────────┘
          │
          ▼
       ╱MINIMUM╲    #6
 NO  ╱ THRESHOLD ╲
◄───╲  VALUE?   ╱
      ╲       ╱
          │ YES
          ▼
┌───────────────────────┐
│ PROSPECTIVE ABNORMAL    │ #7
│  SHADOW DETECTED        │
└───────────────────────┘
          │
          ▼
         END
```

EP 1 441 310 A2

**Description**

BACKGROUND OF THE INVENTION

Field of the Invention

This invention relates to a prospective abnormal shadow detecting system, and more particularly to a prospective abnormal shadow detecting system which detects a prospective abnormal shadow in a radiation image of an object on the basis of radiation image data representing the radiation image.

Description of the Related Art

In the medical filed, there has been proposed, for instance, in a patent paper, U.S. Patent No. 5,761,334, abnormal shadow detecting systems (computer-aided image diagnosis systems) in which an abnormal shadow is automatically and objectively detected independently of abilities and/or the experience of the reader by the use of a computer on the basis of a radiation image of an object.

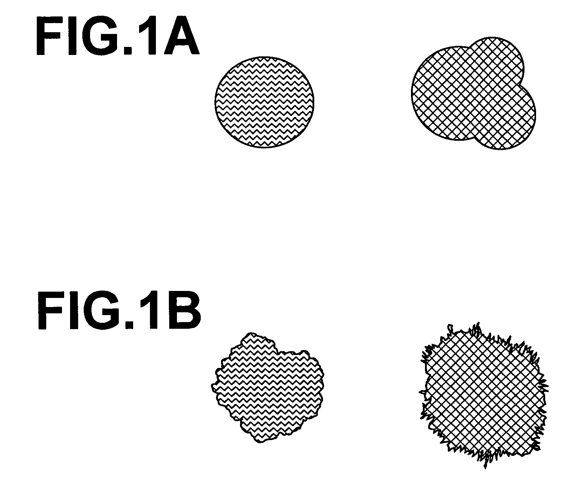

In the abnormal shadow detecting system, an abnormal shadow is detected on the basis of the feature of the density gradation in the shadow and/or the geometric feature of the shadow by the use of iris filter processing which is mainly suitable for detecting prospective malignant growth shadows where edges are like fine lobations or fine serrations and/or the boundary is obscure as shown in Figure 1B.

Though it is easy to detect shadows of benignant growths, where the boundary is clear and the edges are smooth as shown in Figure 1A, by reader' s reading, it greatly increases error in detection and is difficult to detect shadows of such benignant growths by the use of iris filter processing.

However, to detect shadows of benignant growths by reader's reading in a mass examination adds to the load on the reader. Further since growth shadows, where the boundary is clear and the edges are smooth, are sometimes classified in "category 3" (generally benignant but possibility of being malignant cannot be denied) defined in "American College of Radiography: Breast Imaging Reporting and Data System. Second Edition, Washington, (1995)", e.g., in "Categorization based on Mammography Guidelines edited by Nippon Igaku-Houshasen Gakkai/Nippon Houshasengijutu Gakkai Mammography Guideline Committee, Igakushoin Tokyo, 1999, it is necessary for the abnormal shadow detecting system to detect growth shadows, where the boundary is clear and the edges are smooth. In order to meet such necessity, there has been proposed a method of detection by the use of binary coding processing. See, for instance, non-patent paper "Development of High-speed Algorithm based on a Threshold vale for detecting Growth Shadows in Mammograms" by Tomoko Matsubara and six others (Medical Imaging Technology, Jan. 1997, Vol.15, No.1, pp.1 - 13) .

Though being effective when the brightness is sufficiently high, the approach disclosed in the above non-patent paper is difficult to perform since it is otherwise very difficult to set a suitable threshold value for binary coding.

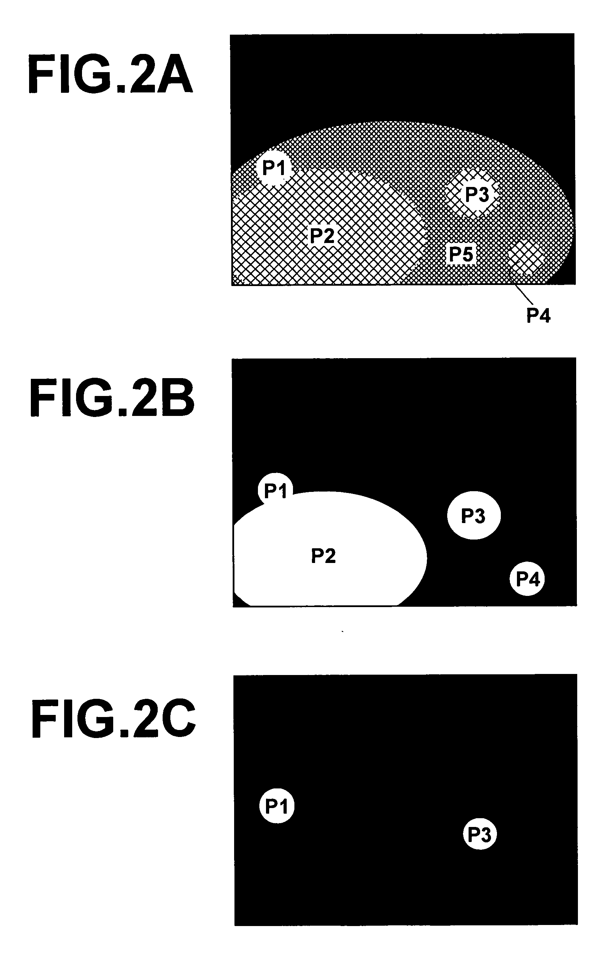

Even if the brightness is not sufficiently high, a white, circular and small growth shadow which is high in contrast to the surrounding and where the boundary is clear has sometimes to be classified in category 3. For example, Figure 2A is a schematic view showing an image of an object representing the object in gradation. In Figure 2A, region P1 and the central portion of region P3 are the highest in brightness, region P2, the edge portion of region P3 and region P4 are the second highest in brightness and region P5 is the lowest in brightness. Region P1 and the central portion of region P3 can be detected as prospective abnormal shadows by binary coding processing in accordance with the method of the non-patent paper with the threshold value set to a pixel value (a value for the pixel) between the brightness of region P2 (the edge portion of region P3 and region P4) and the brightness of region P1 (the central portion of region P3) as shown in Figure 2C. Whereas, when the binary coding processing is carried out with the threshold value set to a pixel value higher than the brightness of region P4, region P4 cannot be detected as shown in Figure 2C. Further, when the binary coding processing is carried out with the threshold value set to a pixel value between the brightness of region P4 and that of region P5, region P4 can be detected but region P2 which cannot be a prospective abnormal shadow is also detected as shown in Figure 2B. Since being high in contrast to the surrounding region P5 though being lower in brightness than region P1, region P4 can be classified in category 3 and accordingly, it is necessary to detect region P4 as the prospective abnormal shadow separately from region P2.

SUMMARY OF THE INVENTION

In view of the foregoing observations and description, the primary object of the present invention is to provide a prospective abnormal shadow detecting system which can detect a category 3 growth shadow at a high efficiency with reduced errors in detection by detecting as the prospective abnormal shadow a growth shadow which is high in contrast to the surrounding and where the boundary is clear irrespective of the brightness thereof.

In accordance with the present invention, there is provided a prospective abnormal shadow detecting system comprising a threshold value control means which stepwise sets a plurality of threshold values for binary-coding radiation image data of an object, a binary image generating means which carries out binary-coding processing on the radiation image data by the use of each of the threshold values set by the threshold value control means, thereby generating a plurality of binary images, a primary-label region extracting means which attaches a primary label to an isolated region in each of the binary images and extracts the isolated regions attached with the primary label as primary-label regions, a growth score calculating means which calculates for each primary-label region a growth score for evaluating the likelihood that the primary-label region represents a growth, and a prospective abnormal shadow region detecting means which compares the growth scores for the respective primary-label regions with each other and detects as the prospective abnormal shadow region a predetermined number of primary-label regions which are higher in the growth score than any of the others.

The "binary coding processing" is processing where an image of multiple gradations is converted on the basis of a threshold pixel value to a binary image represented by only two gradations, white and black. For example, by binary coding processing on the basis of a certain threshold value, pixels having a pixel value not lower than the threshold value are represented by white (as a non-background region) and those having a pixel value lower than the threshold value are represented by black (as a background region) . The image shown in Figure 2A is converted to the image shown in Figure 2B or 2C by binary coding processing depending on the threshold value used. The "pixel value" is a value representing the level of the image signal component corresponding to each pixel in the radiation image data. Whether the pixel value is increased or decreased with increase in radiation energy in the position corresponding to the pixel depends upon the method of obtaining the image data and/or the definition of the pixel value. In this specification, description will be made on the assumption that the image data is obtained so that the pixel value is increased with decrease in radiation energy in the position corresponding to the pixel. In the case where the image data is obtained in the reverse manner, the description of this specification should be reread with the relation between the pixel values reversed.

The threshold value control means may stepwise set a plurality of threshold values, for instance, in the range between a minimum pixel value which is minimum in the values of the pixels actually existing in the region of the object and a maximum pixel value which is maximum in the values of the pixels actually existing in the region of the object, or in the range covering all the pixel values which theoretically the pixel can take (0 to a theoretically maximum pixel value) without limited to the range of pixel values actually existing in the region of the object.

One step at which the threshold value control means stepwise sets a plurality of threshold values either may be fixed to a predetermined pixel value or may be changed according to the pixel value range.

Though processing can be performed at a finest accuracy when the "predetermined pixel value" is equalized to the minimum unit of the pixel value, the "one step" may be more than the minimum unit of the pixel value taking into account the processing time, the load and/or the like.

The "one step" may be changed according to the pixel value range, for instance, by changing the "one step" according to the class into which the relevant pixel is classified in a histogram which shows the pixel value distribution in the radiation image data. In this case, for instance, the "one step" may be narrowed when the frequency of the class is large and the "one step" may be broadened when the frequency of the class is small.

To attach a label to an isolated region means to carry out labeling processing and means to recognize an aggregate of white pixels in the binary image as an isolated region. "Label region" means a region of pixels which have been subjected to the labeling processing. Since the isolated region is a region where the pixel value is not lower than the threshold value, that is, a region which is exposed to less radiation, and since the a growth shadow (prospective abnormal shadow) exists in a region which is exposed to less radiation, the isolated region can be a prospective abnormal shadow.

More than one primary-label regions can be extracted from one binary image. Accordingly, one or more primary-label regions can be extracted for each of the threshold values.

The "growth score" is an index which represents the likelihood that the region is a shadow of a growth which is clear in boundary and smooth in edges and is generally determined to be benignant. For example, the growth score is calculated on the basis of at least one of the brightness, the circularity, and the size of the primary-label region.

To be higher in the growth score than any of the others means to be stronger in the likelihood, that the primary-label region represents a growth, than any of the others. Accordingly, when the growth score is calculated in a manner such that as the likelihood becomes stronger, the growth score is increased, a predetermined number of primary label regions which are higher in the growth score than any of the others are detected as the prospective abnormal shadow region. Whereas, when the growth score is calculated in a manner such that as the likelihood becomes stronger, the growth score is decreased, a predetermined number of primary label regions which are smaller in the growth score than any of the others are detected as the prospective abnormal shadow region.

The abnormal shadow detecting system of the present invention may further comprise a secondary-label region determining means which determines whether a primary-label region extracted from one of the binary images is the same as that extracted from any other binary images, extracts as a secondary-label region only one of the same primary-label regions when it is determined that the primary-label regions extracted from the respective binary images are the same, and determines a growth score for the secondary-label region on the basis of the growth scores for the same primary-label regions, and the prospective abnormal shadow region detecting means may compare the growth scores for the respective secondary-label regions with each other and detects as the prospective abnormal shadow region a predetermined number of secondary-label regions which are higher in the growth score than any of the others.

The expression "that the secondary-label region determining means determines whether a primary-label region extracted from one of the binary images is the same as that extracted from any other binary images and extracts as a secondary-label region only one of the same primary-label regions when it is determined that the primary-label regions extracted from the respective binary images are the same" means "that the secondary-label region determining means determines whether a primary-label region extracted from one of the binary images is the same in position as that extracted from any other binary images, and integrates the same primary-label regions into one secondary-label region." A primary-label region which is different in position from any other primary-label regions extracted from the respective binary images may be a secondary-label region as it is. As a result, the secondary-label regions include only regions which are different in position from each other.

The expression "that the secondary-label region determining means determines a growth score for the secondary-label region on the basis of the growth scores for the same primary-label regions" means "that the secondary-label region determining means determines a growth score for the secondary-label region extracted by integrating a plurality of the same primary-label regions on the basis of the values of the growth scores for the same primary-label regions. For example, this can be done by keeping the primary-label region which is the largest in the growth score in the same primary-label regions as a secondary-label region and discarding the other primary-label regions.

In the prospective abnormal shadow detecting system of the present invention, a growth shadow which is high in contrast to the surrounding and where the boundary is clear can be detected as the prospective abnormal shadow not depending on the pixel values (brightness) in the growth shadow. Accordingly, a category 3 growth shadow can be detected at a high efficiency. Further, since a predetermined number of primary-label regions which are higher in the growth score than any of the others are detected as the prospective abnormal shadow region, even regions which are high in contrast to the surrounding and where the boundary is clear can be excluded if they are weak in features in the likelihood that they represent a growth, and accordingly errors in detecting the category 3 growth shadow can be reduced. Thus, the doctors can be better aided in diagnosis.

For example, when the monochrome image shown in Figure 2A is binary-coded into a binary image by the use of a threshold value between the brightness of region P2 and that of region P1, region P1 can be detected as shown in Figure 2C. However, when the threshold value is set to be higher than the brightness of region P4, region P4 cannot be detected as shown in Figure 2C. Whereas, when the threshold value is set between the brightness of region P4 and that of region P5, region P4 can be detected as shown in Figure 2B. Though, when the threshold value is set between the brightness of region P4 and that of region P5, region P2 is detected together with region P4, region P2 cannot be detected as the prospective abnormal shadow since region P2 is weak in the likelihood that it represents a growth in its profile and/or size and accordingly its growth score is small. Thus, by combining extraction of label regions in a plurality of binary images respectively obtained under a plurality of threshold values and the growth scores for the label regions, it is feasible to detect a growth shadow which is high in contrast to the surrounding and where the boundary is clear irrespective of the brightness thereof.

When the abnormal shadow detecting system of the present invention further comprises the secondary-label region determining means and the prospective abnormal shadow region detecting means compares the growth scores for the respective secondary-label regions with each other and detects as the prospective abnormal shadow region a predetermined number of secondary-label regions which are higher in the growth score than any of the others, detecting a region as the prospective abnormal shadow a plurality of times can be prevented, whereby the diagnostic efficiency can be improved. In the example shown in Figures 2A to 2C, the central portion of region P3 is extracted as the primary-label region as shown in Figure 2C when the binary-coding processing is carried out with the threshold value set between the brightness of region P2 and that of region P1, whereas region P3 where the central portion and the edge portion is integrated is extracted as the primary-label region as shown in Figure 2B when the binary-coding processing is carried out with the threshold value set between the brightness of region P4 and that of region P5. When the secondary-label region determining means that the two primary-label regions are the same in position, only one of them is evaluated its growth score. Accordingly, detecting a region as the prospective abnormal shadow a plurality of times can be prevented.

When the threshold value control means stepwise sets a plurality of threshold values in the range between a minimum pixel value which is minimum in the values of the pixels actually existing in the region of the object and a maximum pixel value which is maximum in the values of the pixels actually existing in the region of the object, the binary-coding processing and the processing following the binary-coding processing have to be performed only in the range where stepwise changing the threshold value is meaningful, and accordingly, the processing time is shortened and the processing load is lightened, whereby the processing efficiency can be improved.

When the one step at which the threshold value control means stepwise sets a plurality of threshold values is equalized to the minimum unit of the pixel value, the binary-coding processing and the processing following the binary-coding processing can be performed at a finest accuracy, whereby the diagnostic accuracy can be improved.

When the one step at which the threshold value control means stepwise sets a plurality of threshold values is more than the minimum unit of the pixel value, the processing time is shortened and the processing load is lightened, whereby the processing efficiency can be improved, though the prospective abnormal shadow detecting accuracy deteriorates, since the number of the threshold values to be set is decreased and the number of times by which the processing is repeated is decreased.

When the one step at which the threshold value control means stepwise sets a plurality of threshold values is changed according to the pixel value range, the detecting accuracy can be well balanced with shortening the processing time and/or lightening the processing load by narrowing the one step in pixel value ranges where the pixel value distribution is dense and broadening the one step in pixel value ranges where the pixel value distribution is thin.

When the growth score is calculated on the basis of at least one of the brightness, the circularity, and the size of the primary-label region, the prospective abnormal shadow can be effectively detected since the prospective abnormal shadow detection can be carried out on the basis of the features of the growth shadow that the growth shadow is white, circular and small.

BRIEF DESCRIPTION OF THE DRAWINGS

Figures 1A and 1B are schematic views showing features of the boundary and the edge portion of growth shadows,

Figure 2A is a view showing a monochrome image,

Figures 2B and 2C are views showing binary images obtained by carrying out binary-coding processing on the monochrome image shown in Figure 2A by the use of different threshold values,

Figure 3 is a block diagram showing a prospective abnormal shadow detecting system in accordance with an embodiment of the present invention,

Figure 4 is a flow chart for illustrating operation of the prospective abnormal shadow detecting system,

Figure 5 is a view showing the relation between the size of the primary-label region and the weight applied to the size of the primary-label region,

Figure 6 is a view showing the relation between the circularity of the primary-label region and the weight applied to the circularity of the primary-label region, and

Figure 7 is a flow chart for illustrating operation of the secondary-label region determining means of the prospective abnormal shadow detecting system.

DESCRIPTION OF THE PREFERRED EMBODIMENT

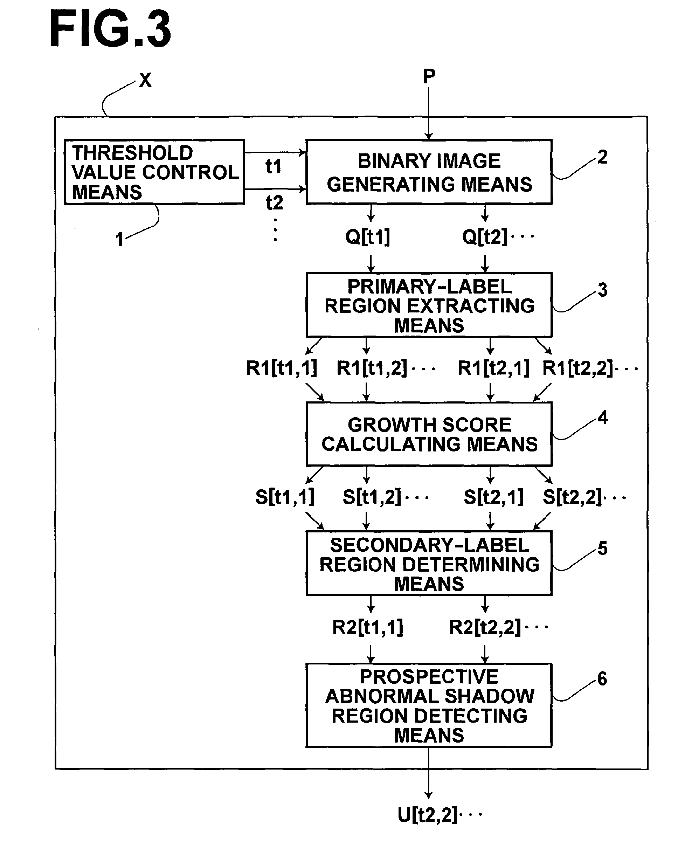

As shown in Figure 3, a prospective abnormal shadow detecting system X in accordance with an embodiment of the present invention comprises a threshold value control means 1 which stepwise sets a plurality of threshold values for binary-coding radiation image (initial image) data P of an object input from, for instance, a radiation image read-out apparatus, a binary image generating means 2 which carries out binary-coding processing on the radiation image data P by the use of each of the threshold values t1, t2, ••• set by the threshold value control means, thereby generating a plurality of binary images Q[t1], Q[t2], •••, a primary-label region extracting means 3 which attaches a primary label to isolated regions high in brightness in each of the binary images and extracts the isolated regions attached with the primary label as primary-label regions R1[t1,1], R1[t1,2], R1[t2,1], R1[t2,2], •••, a growth score calculating means 4 which calculates for each primary-label region a growth score S1[t1,1], S1[t1,2], S1[t2,1], S1[t2,2], •••, for evaluating the likelihood that the primary-label region represents a growth, a secondary-label region determining means 5 which determines whether a primary-label region extracted from one of the binary images is the same as that extracted from any other binary images, extracts as secondary-label regions R2[t1,1], R2[t2,2], •••, only one of the same primary-label regions when it is determined that the primary-label regions extracted from the respective binary images are the same, and determines a growth score for the secondary-label region on the basis of the growth scores for the same primary-label regions, and a prospective abnormal shadow region detecting means 6 which compares the growth scores for the respective secondary-label regions with each other and detects as the prospective abnormal shadow region U[t2,2], •••, a predetermined number of secondary-label regions which are higher in the growth score than any of the others.

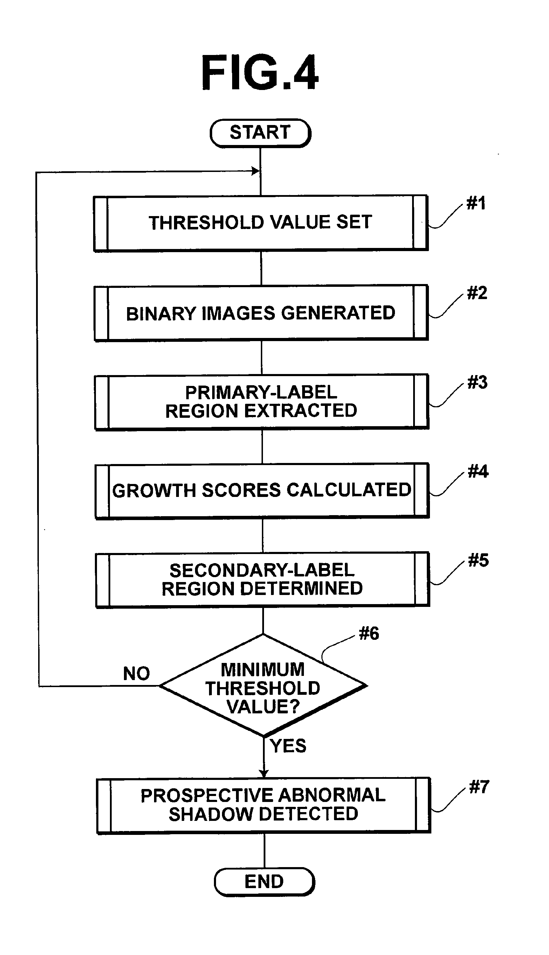

Prospective abnormal shadow detecting processing to be executed by the prospective abnormal shadow detecting system X will be described with reference to Figure 4, hereinbelow.

It is necessary for the operator to prepare radiation image data P of the object as input data. The radiation image data P may be either, initial image data as obtained from the object or image data obtained by carrying out suitable processing such as compression, smoothing, noise removal, background bias removal and/or the like on the initial image data as obtained from the object. In the following description, it is assumed for the purpose of simplicity that the radiation image data P has been obtained so that the pixel value is increased with decrease in radiation energy in the position corresponding to the pixel, and the position corresponding to the pixel is displayed brighter (lower in density) as the pixel value is increased.

First, the threshold value control means 1 sets a threshold value. (step #1) The threshold value control means 1 first sets as an initial value a threshold value equal to a pixel value corresponding to a maximum value which the brightness can take, and thereafter sets a threshold value equal to a pixel value which is gradually reduced. The set threshold values are stored in the main storage of the prospective abnormal shadow detecting system X. The set threshold values may be recorded in a file stored in an auxiliary storage of the prospective abnormal shadow detecting system X.

The binary image generating means 2 reads out the threshold values stored in the main storage and reads out the image data P from the hard disk of the radiation image read-out apparatus bay way of a network. Then the binary image generating means 2 carries out binary-coding processing on the image data P on the basis of the threshold values, thereby generating binary images where pixels having a pixel value not smaller than the threshold value are displayed in white and pixels having a pixel value smaller than the threshold value are displayed in black. (step #2) The radiation image data P may be read out from an auxiliary storage of the prospective abnormal shadow detecting system X. The binary-coding processing may be performed so that pixels having a pixel value higher than the threshold value are displayed in white and pixels having a pixel value not higher than the threshold value are displayed in black.

The primary-label region extracting means 3 carries out labeling processing on the generated binary images and extract as a primary-label region at least one isolated region (a region of an aggregate of white pixels) in each of the generated binary images. (step #3) Since two or more regions can be extracted as the primary-label region from one binary image, the primary-label regions extracted from binary image Q [t1] are indicated at R1[t1,1], R1[t1,2], ••• in Figure 3.

It has been empirically found that when the radius of a circle approximating a primary-label region is too small (e.g., not larger than 0.15cm) or too large (e.g., not smaller than 2.5cm), the primary-label region cannot be an abnormal shadow. Accordingly, it is preferred that primary-label regions which are too small or too large in the radius of a circle approximating a primary-label region be eliminated in advance. The radius r of a circle approximating a is calculated according to the following formula (1) on the basis of the area Area of the primary-label region.

$$r = \sqrt{\frac{Area}{\pi}} \qquad (1)$$

Further, it is preferred that primary-label regions which are in the pectoral muscle area or the nipple area be eliminated in advance. The pectoral muscle area can be detected in a known manner. See, for instance, "Chibusa X-sen gazoni okeru kyokinryoikino jido chushutu (Automatic Extraction of Pectoral Muscle Area in Breast X-Ray)", Denshi/Joho/tushin gakkai Ronbunshi (Journal of Electronics/Information/Communication society), MI2000-78, pp.5-10, 2001 Jan.) The nipple area can be detected on the basis of medical recognition that the nipple area is at a distance of not larger than 2cm from the uppermost position of the breast area. Position of each primary-label region is represented by the center of gravity of brightness G(x , y) thereof defined by the following formula (2) when (xi , yi) represents coordinates of each point in the primary-label region and pi represents the pixel value of each point in the primary-label region.

$$x = \frac{\sum_{i \in R} x_i p_i}{\sum_{i \in R} p_i} \quad , \quad y = \frac{\sum_{i \in R} y_i p_i}{\sum_{i \in R} p_i} \quad \bullet \bullet \bullet \quad (2)$$

wherein (x , y) represents the coordinates of the center of gravity of brightness G of the primary-label region, (xi , yi) represents coordinates of each point in the primary-label region, pi represents the pixel value of each point in the primary-label region and R represents the primary-label region.

The growth score calculating means 4 calculates for each primary-label region a growth score. (step #4) The growth score is calculated on the basis of the product of the weight to be applied to the average brightness, the weight to be applied to the size and the weight to be applied to the circularity, which are calculated as follows.

The weight to be applied to the average brightness is calculated by averaging the values obtained by subtracting the threshold value from the pixel values of the respective pixels in the radiation image data P over the pixels in the primary-label region. Further, the weight to be applied to the average brightness may be calculated by supposing a three-dimensional space defined by the values subtracting the threshold value from the pixel values of respective pixels in the radiation image data P and the two-dimensional positions of the respective pixels and obtaining the volume of each primary-label region.

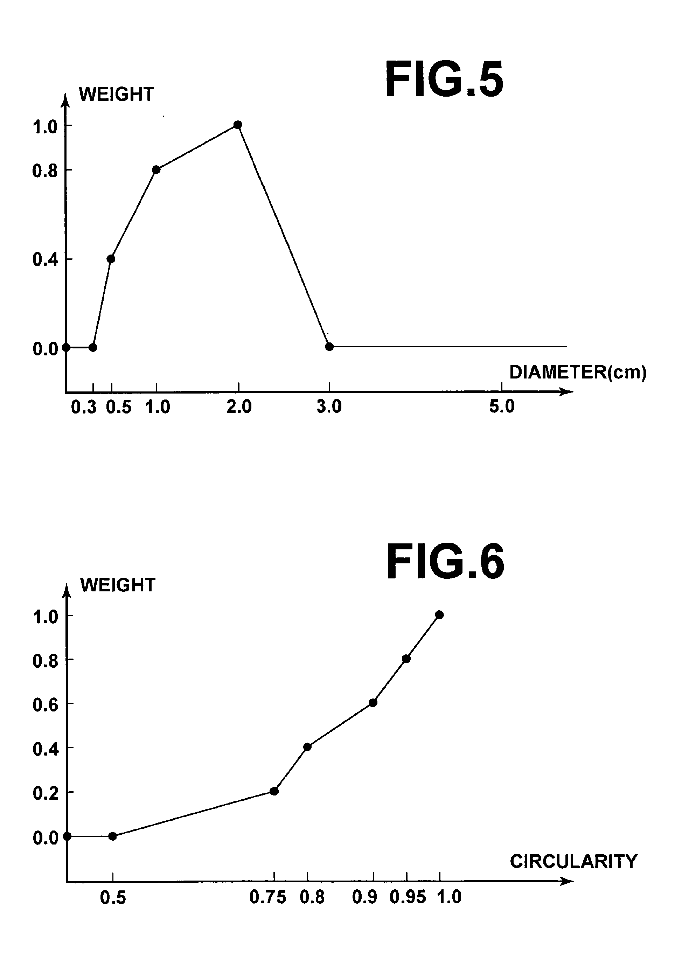

The weight to be applied to the size is obtained according to the relation between the size of the primary-label region and the weight applied to the size of the primary-label region shown in Figure 5. The size of the primary-label region is represented by the diameter (2r) of a circle approximating the primary-label region. The relation shown in Figure 5 has been empirically obtained through analysis of actual growth shadows.

In order to obtain the weight to be applied to the circularity, the circularity of the primary-label region is first calculated. The circularity of the primary-label region is obtained by calculating the area of the primary-label region by scanning a circle whose radius is r (the radius of a circle approximating the primary-label region) and whose center is on the center of gravity of brightness of the primary-label region and counting the number of pixels in the primary-label region and the circle and by dividing the area of the primary-label region by the area of the circle whose radius is r as represented by the following formula (3).

$$Circularity = \frac{\sum_{i \in C} i}{\pi r^2} \quad \cdots \quad (3)$$

wherein Circularity represents the circularity of the primary-label region, i represents the points composing the primary-label region, C represents the region of the circle having a radius of r, and r represents the radius of the circle approximating the primary-label region.

The circularity of the primary-label region may be calculated also by dividing the area of the primary-label region by the square of the perimeter of the primary-label region. In the case of radiation image data of a mammogram, circularity of the primary-label region may be calculated by the use of a mammary gland map so long as the growth shadow exists in a mammary gland.

The weight to be applied to the circularity is obtained according to the relation between the circularity of the primary-label region and the weight applied to the circularity of the primary-label region shown in Figure 6. The relation shown in Figure 6 has been empirically obtained through analysis of actual growth shadows.

In the case where the primary-label region is along an edge of the image, the part of the above circle beyond the edge of the image cannot be scanned. In this case, it is preferred that the denominator of the fraction in formula (3), the area of the above circle, be reread to the area of the part of the above circle which can be scanned in that deterioration in the weight to be applied to the circularity due to deterioration in circularity along the edges of the image can be avoided, whereby misses in detecting the prospective abnormal shadow can be suppressed.

On the basis of the average brightness, the weight to be applied to the size and the weight to be applied to the circularity thus obtained, the growth score is calculated according to the following formula (4).

Score=(the weight to be applied to the average brightness)

$\times$ (the weight to be applied to the size) $\times$ (the weight to be applied to the circularity)  (4)

In Figure 3, the growth score calculated for primary-label region is indicated at S[t1,1], and so on.

The secondary-label region determining means 5 employs a structure pattern Top[j] which stores the coordinates of the centers of gravity of brightness of the secondary-label regions together with their growth scores and a structure pattern Cand[k] which stores the coordinates of the centers of gravity of brightness of the primary-label regions extracted with the threshold value set to a value, together with their growth scores. The number m of the elements in the structure pattern Top [j] may be a number of the primary-label regions as numbered with the same primary-label regions counted as one but it is preferred from the viewpoint of the processing efficiency that the number m of the elements in the structure pattern Top[j] be equal to the number of the prospective abnormal shadows to be detected by the prospective abnormal shadow region detecting mans 6.

When the threshold value is initially set, the structure pattern Top[j] is in an initialized state. The secondary-label region determining means 5 stores in the structure pattern Cand[k] the coordinates of the centers of gravity of brightness of the extracted first-label regions in the order in which the growth scores are higher, together with their growth scores, and in the structure pattern Top[j] the coordinates of the centers of gravity of brightness of m (in number) primary-label regions which are higher in the growth score than any of the others together with their growth scores. By this, the secondary-label regions and their growth scores are temporarily determined so long as the initial threshold value is set. (step #5)

The threshold value control means 1 determines whether the currently set threshold value is the minimum of the threshold values to be set. (step #6) When it is determined in step #6 that the currently set threshold value is not the minimum of the threshold values to be set, the threshold value control means 1 sets a threshold value equal to the currently set threshold value minus one pixel value. (step #1)

Thereafter the binary image generating means 2, the primary-label region extracting means 3 and the growth score calculating means 4 carry out the same processing as that described above except that the threshold value is a newly set threshold value (reduced by one pixel value) . Figure 3 shows that a binary image Q[t2] is generated on the basis of the newly set threshold value t2, primary-label regions R1[t2,1], R1[t2,2], ••• are extracted from the binary image Q[t2] and then growth scores S[t2,1], S[t2,2], ••• are calculated for the primary-label regions R1[t2,1], R1[t2,2], •••.

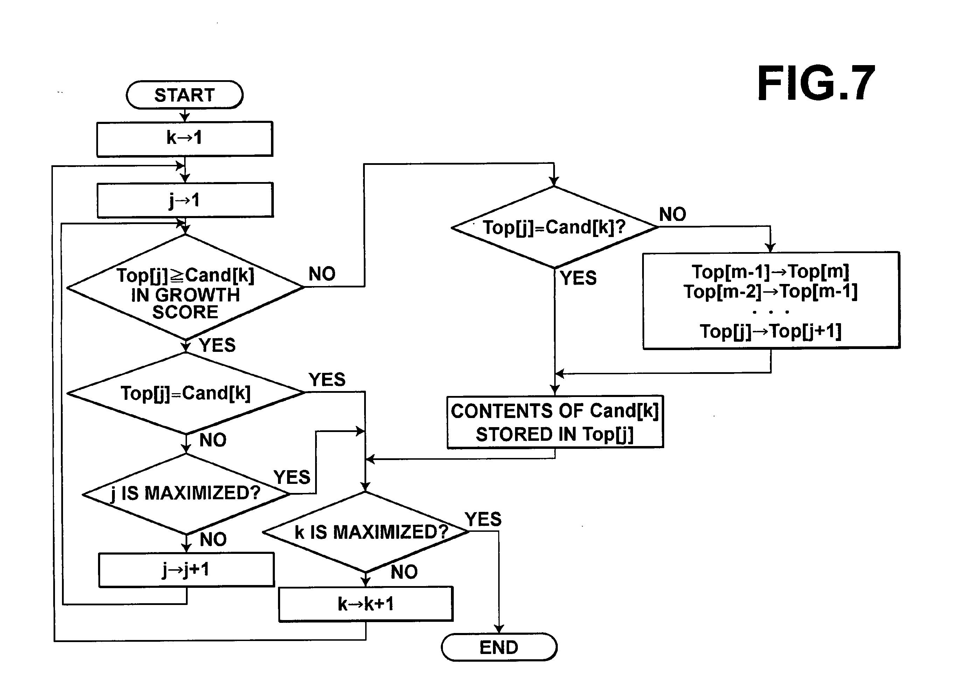

The secondary-label region determining means 5 stores in the structure pattern Cand[k] the coordinates of the centers of gravity of brightness of the extracted first-label regions extracted from the binary image Q[t2]. Since the centers of gravity of brightness of the secondary-label regions temporarily determined in the preceding processing and their growth scores have been stored in, the secondary-label region determining means 5 determines whether each of the extracted primary-label regions is the same as the secondary-label regions which have been stored in the structure pattern Top[j] , and determines a growth score for each of the secondary-label regions in the manner shown in the flow chart of Figure 7. That is, the secondary-label region determining means 5 determines whether each of the extracted primary-label regions is the same as the secondary-label regions which have been stored in the structure pattern Top [j], and compares a growth score for each of the extracted primary-label regions with that of the secondary-label region stored in the structure pattern Top[j] from Top[1] in sequence while changing the affix k of the structure pattern Cand[k] from 1 in sequence. Here description will be made on the k-th element of the structure pattern Cand [k] and Top[j] which is the j-th highest in the growth score in the secondary-label regions.

The growth scores of Cand[k] and Top[j] are first compared with each other.

When Top[j] is higher than Cand[k] in the growth score, the distance between the centers of gravity of brightness of Top[j] and Cand[k] is calculated. When the calculated distance is not smaller than 26 pixels (1.04cm), it is determined that Top[j] and Cand[k] are different regions and the growth scores of Cand[k] and Top[j+] which is higher in the growth score next to Top[j] in the secondary-label regions are then compared with each other. This comparison is repeated until j is maximized to m, and when the growth score of Top[m] is higher than that of Cand[k], Cand[k] cannot be a secondary-label region and accordingly is discarded. Then determination of identity (whether the extracted primary-label regions is the same as the secondary-label regions which have been stored in the structure pattern Top [j]) and comparison of the growth scores are carried out on the next element Cand[k+1] from Top[1]. Whereas, when the calculated distance is smaller than 26 pixels, it is determined that Top[j] and Cand[k] are the same region, and Top [j] which is higher than Cand[k] is kept with Cand[k] discarded. Then determination of identity and comparison of the growth scores are carried out on the next element Cand[k+1] from Top[1].

Even if Cand[k] is higher than Top[j] in the growth score, the distance between the centers of gravity of brightness of Top[j] and Cand[k] is calculated. When the calculated distance is not smaller than 26 pixels (1.04cm), it is determined that Top[j] and Cand[k] are different regions and the contents of Cand[k] are additionally stored in Top[j]. That is, the contents of Top[j] are shifted by one to Top[j+1], e.g., the contents of Top[m-1] to Top[m], the contents of Top[m-2] to Top[m-1], the contents of Top[m-3] to Top[m-2], ••• , the contents of Top[j] to Top[j+1] , and then the contents of Cand[k] are stored in Top[j]. Then determination of identity and comparison of the growth scores are carried out on the next element Cand[k+1] from Top[1]. Whereas, when the calculated distance is smaller than 26 pixels, it is determined that Top[j] and Cand[k] are the same region, and the contents of Cand[k] are substituted for the contents of Top [j] to keep Cand[k] which is higher than Top[j] as a secondary-label region. Then determination of identity and comparison of the growth scores are carried out on the next element Cand[k+1] from Top[1] .

The above processing is carried out on all the primary-label regions for all the set threshold values, whereby the secondary-label regions are determined. (step #5)

Steps #1 to #5 are repeated for all the set threshold values, and after steps #1 to #5 for the minimum threshold value, the prospective abnormal shadow detecting system X proceeds to prospective abnormal shadow detecting processing in step #7.

The prospective abnormal shadow region detecting system 6 detects as the prospective abnormal shadow region m secondary-label regions which are higher in the growth score than any of the others from the secondary-label regions stored in the structure pattern Top[j] at the time point when the above processing is completed. (step #7) Though Figure 3 shows as if the secondary-label regions which are higher in the growth score than any of the others are detected from the secondary-label regions R2[t1,1], R2[t2,2] and the like as the prospective abnormal shadows U[t2,2], the processing of detecting m secondary-label regions higher than any of the others is performed simultaneously with storing in the structure pattern Top[j] since, in this particular embodiment, the number of the elements in the structure pattern Top[j] is equal to the number of the prospective abnormal shadows to be detected by the prospective abnormal shadow region detecting mans 6.

As can be understood from the description above, the prospective abnormal shadow detecting system X of this embodiment can detect , without depending on the pixel values (brightness) in the growth shadow, as the prospective abnormal shadow a growth shadow which is high in contrast to the surrounding and where the boundary is clear. Accordingly, a category 3 growth shadow, where the boundary is clear and the edges are smooth, can be detected at a high efficiency. Further, since a predetermined number of primary-label regions which are higher in the growth score than any of the others are detected as the prospective abnormal shadow region, even regions which are high in contrast to the surrounding and where the boundary is clear can be excluded if they are weak in features in the likelihood that they represent a growth, and accordingly errors in detecting the category 3 growth shadow can be reduced. Further, by virtue of the secondary-label region detecting means 5, detecting a region as the prospective abnormal shadow a plurality of times can be prevented, whereby the diagnostic efficiency can be improved. Thus, the doctors can be better aided in diagnosis.

Though, in the particular embodiment described above, the secondary-label region detecting means 5 is provided so that only one of the same primary-label regions is extracted as a secondary-label region, it is possible that the secondary-label region detecting means 5 is not provided and calculation of the growth score and detection of the prospective abnormal shadow on the basis of the growth scores are carried out for all the primary-label regions. In this case, though the detecting accuracy is deteriorated as compared with the prospective abnormal shadow detecting system of this embodiment since a plurality of primary-label regions which are the same in position can be detected as the prospective abnormal shadow, the prospective abnormal shadow can detect a growth shadow, which is high in contrast to the surrounding and where the boundary is clear, irrespective of brightness in the growth shadow and accordingly is better than the conventional prospective abnormal shadow in efficiency in detecting the category 3 growth shadow.

Further, the prospective abnormal shadow detecting system of the present invention may be provided with a setting file which carries out setting for the threshold value control. In this case, the threshold value control means 1 controls the threshold value under the control of the setting file.

By the setting file, the range over which the threshold value is stepwise changed can be set. For example, when the threshold value is to be stepwise changed over a range between a minimum pixel value which is minimum in the values of the pixels actually existing in the region of the object of the radiation image data P and a maximum pixel value which is maximum in the values of the pixels actually existing in the region of the object of the radiation image data P, the threshold value control means 1 scans the region of the object of the radiation image data P and determines the minimum and maximum pixel values in the region prior to setting the threshold value. Further the operator may directly set the range over which the threshold value is stepwise changed on the basis of his or her experience.

When such a setting file is employed, the processing time is shortened and the processing load is lightened since the number of times by which the binary-coding processing and the processing following the binary-coding processing are repeated as compared with the case where the range over which the threshold value is stepwise changed covers all the pixel values which theoretically the pixel can take, whereby the processing efficiency can be improved.

By the setting file, the one step by which the threshold value is stepwise changed can be set. For example, when the one step at which the threshold value control means stepwise sets a plurality of threshold values is three pixel values, the processing time is shortened and the processing load is lightened, whereby the processing efficiency can be improved, though the prospective abnormal shadow detecting accuracy deteriorates as compared with the case where the threshold value is changed by one pixel value, since the number of times by which the processing is repeated is decreased.

The "one step" may be changed according to the frequency in the histogram which shows the pixel value distribution in the radiation image data P. For example, with the "one step" in classes where the frequency is large, the "one step" in classes where the frequency is small, and a threshold frequency for determining whether or not a frequency is large are set in the setting file, the threshold value control means 1 scans the region of the object of the radiation image data P and generates the histogram prior to setting the threshold value. Then the threshold value is controlled on the basis of the histogram and setting of the setting file.

When the threshold value control means 1 controls the threshold value control means according to a histogram of the pixel values, the detecting accuracy can be well balanced with shortening the processing time and/or lightening the processing load by narrowing the one step in ranges where the pixel value distribution is dense and broadening the one step in ranges where the pixel value distribution is thin.

Though, in the embodiment described above, the growth score is calculated on the basis of the product of the weight to be applied to the average brightness, the weight to be applied to the size and the weight to be applied to the circularity, the growth score may be calculated on the basis of any index representing the likelihood that the region is a shadow of a growth. For example, the growth score may be calculated on the basis of one or two of the weight to be applied to the average brightness, the weight to be applied to the size and the weight to be applied to the circularity or on the basis of the position in which the primary-label region is detected, a statistical value such as brightness dispersion, information on the patient such as his or her age, image taking information and/or the mammary gland distribution in a mammogram.

In the case where the radiation image data P is obtained in a manner different from the above embodiment, for instance, where the image data is obtained so that the pixel value is increased with increase in radiation energy in the position corresponding to the pixel and the pixels are displayed less bright (higher in density) as the pixel value is increased, the description of this specification should be reread with the relation between the pixel values reversed. That is, the binary image generating means 2 generates binary images where pixels having a pixel value not lower than the threshold value are displayed in white and pixels having a pixel value higher than the threshold value are displayed in black and the primary-label region extracting means 3 extracts as a primary-label region at least one region of an aggregate of white pixels in each of the generated binary images. The center of gravity of brightness G can be calculated according to a formula obtained by substituting $pi$ in formula (2) by $qi$ defined by the following formula (5) or (5)'

$$qi = P - pi \qquad\qquad (5)$$

$$qi = \frac{1}{pi} \qquad\qquad (5)'$$

wherein qi represents an index having positive correlation with the brightness, pi represents the pixel value of each point in the primary-label region and P represents a constant. Generally, the constant P is the maximum value of the pixel value which theoretically the pixel value can take, e.g., in the case where the density resolution is of 10bits (0 to 1023), P=1023.

The weight to be applied to the average brightness is calculated by averaging the absolute values of differences between the threshold value and the pixel values of the respective pixels in the radiation image data P over the pixels in the primary-label region.

## Claims

1. A prospective abnormal shadow detecting system comprising a threshold value control means which stepwise sets a plurality of threshold values for binary-coding radiation image data of an object,
   a binary image generating means which carries out binary-coding processing on the radiation image data by the use of each of the threshold values set by the threshold value control means, thereby generating a plurality of binary images,
   a primary-label region extracting means which attaches a primary label to an isolated region in each of the binary images and extracts the isolated regions attached with the primary label as primary-label regions,
   a growth score calculating means which calculates for each primary-label region a growth score for evaluating the likelihood that the primary-label region represents a growth, and
   a prospective abnormal shadow region detecting means which compares the growth scores for the respective primary-label regions with each other and detects as the prospective abnormal shadow region a predetermined number of primary-label regions which are higher in the growth score than any of the others.

2. A prospective abnormal shadow detecting system as defined in Claim 1 further comprising a secondary-label region determining means which determines whether a primary-label region extracted from one of the binary images is the same as that extracted from any other binary images, extracts as a secondary-label region only one of the same primary-label regions when it is determined that the primary-label regions extracted from the respective binary images are the same, and determines a growth score for the secondary-label region on the basis of the growth scores for the same primary-label regions wherein the prospective abnormal shadow region detecting means compares the growth scores for the respective secondary-label regions with each other and detects as the prospective abnormal shadow region a predetermined number of secondary-label regions which are higher in the growth score than any of the others.

3. A prospective abnormal shadow detecting system as defined in Claim 1 or 2 in which the threshold value control means stepwise sets a plurality of threshold values in the range covering all the pixel values which theoretically the pixel can take.

4. A prospective abnormal shadow detecting system as defined in Claim 1 or 2 in which the threshold value control means stepwise sets a plurality of threshold values in the range between a minimum pixel value which is minimum in the values of the pixels actually existing in the region of the object and a maximum pixel value which is maximum in the values of the pixels actually existing in the region of the object.

5. A prospective abnormal shadow detecting system as defined in any one of Claims 1 to 4 in which one step at which the threshold value control means stepwise sets a plurality of threshold values is fixed to a predetermined pixel value.

6. A prospective abnormal shadow detecting system as defined in Claim 5 in which said predetermined pixel value is equal to the minimum unit of the pixel value.

7. A prospective abnormal shadow detecting system as defined in any one of Claims 1to 4 in which one step at which the threshold value control means stepwise sets a plurality of threshold values is changed according to the pixel value range.

8. A prospective abnormal shadow detecting system as defined in Claim 7 in which the one step is changed according to the class into which the pixel is classified in a histogram which shows the pixel value distribution in the radiation image data.

9. A prospective abnormal shadow detecting system as defined in any one of Claims 1 to 8 in which the growth score is calculated on the basis of at least one of the brightness, the circularity, and the size of the primary-label region.

# FIG.1A

# FIG.1B

# FIG.2A

# FIG.2B

# FIG.2C

EP 1 441 310 A2

# FIG.3

# FIG.4

START

THRESHOLD VALUE SET — #1

BINARY IMAGES GENERATED — #2

PRIMARY-LABEL
REGION EXTRACTED — #3

GROWTH SCORES CALCULATED — #4

SECONDARY-LABEL
REGION DETERMINED — #5

#6

NO — MINIMUM
THRESHOLD
VALUE?

YES

PROSPECTIVE ABNORMAL
SHADOW DETECTED — #7

END

# FIG.5

# FIG.6

# FIG.7

START

k→1

j→1

Top[j]≧Cand[k]
IN GROWTH
SCORE — NO

YES

Top[j]=Cand[k] — YES

NO

j IS MAXIMIZED? — YES

NO

j→j+1

k IS MAXIMIZED? — YES

NO

k→k+1

Top[j]=Cand[k]? — NO

YES

Top[m-1]→Top[m]
Top[m-2]→Top[m-1]
. . .
Top[j]→Top[j+1]

CONTENTS OF Cand[k]
STORED IN Top[j]

END

EP 1 441 310 A2